# FASCICULE DE BREVET EUROPEEN

(11) **EP 0 612 566 B1**
(45) Date de publication et mention de la délivrance du brevet: **23.04.1997**
(21) Numéro de dépôt: 94400388.8
(22) Date de dépôt: 23.02.1994
(51) Int. Cl.: B05B 7/14, B05B 13/02, B05C 9/06, C03C 17/00

(54) **Dispositif de distribution de solides pulvérulents à la surface d'un substrat afin de le revêtir**
Vorrichtung zur Verteilung von pulverförmigen Feststoffen auf ein Substrat zum Zweck seiner Beschichtung
Device for distributing powdery solids onto a substrate in order to coat it

(30) Priorité: 25.02.1993 FR 9302136
(43) Date de publication de la demande: 31.08.1994
(73) Titulaire: SAINT-GOBAIN VITRAGE, 92400 Courbevoie (FR)
(72) Inventeur: Arnaud, Alain, F-78000 Versailles (FR); Morin, Claude, F-92800 Puteaux (FR)
(74) Mandataire: Muller, René

(56) Documents cités:
- EP-A- 0 374 023

## Description

La présente invention concerne un dispositif de distribution de solides pulvérulents à la surface d'un substrat, notamment en verre, afin de le revêtir de couches minces lui conférant des propriétés optiques, thermiques et/ou électriques.

Ce dispositif permet notamment de déposer ces couches minces par une technique dite de pyrolyse consistant à projeter lesdits solides pulvérulents en suspension dans un gaz en direction d'un substrat chauffé à haute température, de manière à ce qu'ils se décomposent en oxydes à son contact. Le susbstrat peut prendre la forme d'un ruban de verre continu dit float, le dispositif de distribution comportant alors une cavité se terminant en une fente de distribution à proximité du ruban et disposée transversalement à son axe de défilement.

Pour obtenir des couches minces homogènes et régulières, il est nécessaire que le dispositif de distribution assure une bonne homogénéisation poudre-gaz et une bonne répartition de ce mélange sur toute la longueur de la fente de distribution.

Deux dispositifs répondent notamment à ces critères. Ainsi, il est connu du brevet EP-B-0 125 153 une buse de distribution de solide pulvérulent dont la longueur peut correspondre à la largeur du substrat à traiter et qui comprend une cavité longitudinale dont les parois convergent régulièrement en direction du substrat à traiter. La buse, en sa partie supérieure, comprend une plaque formant couvercle pour la cavité. La plaque est percée d'une ouverture qui permet l'alimentation en poudre en suspension dans un gaz, appelé gaz primaire, par des conduits d'alimentation distincts. Les conduits d'alimentation en poudre sont disposés, dans cette ouverture, sur toute la longueur de la buse et espacés les uns des autres d'environ 50 mm par exemple, de manière à introduire de la poudre sur toute la longueur de la cavité. Ces conduits d'alimentation ne sont pas fixés d'une manière étanche dans cette ouverture, ce qui permet l'entrée de gaz ou généralement d'air de l'atmosphère ambiante à l'intérieur de la cavité de la buse. Les parois longitudinales de la cavité et la plaque formant couvercle délimitent, dans la partie supérieure de la buse, deux fentes, qui s'étendent sur toute la longueur de la buse, par lesquelles sont introduits des gaz supplémentaires sous pression, appelés gaz secondaires. Le gaz secondaire est injecté à une vitesse très supérieure à celle du gaz primaire dans lequel le produit pulvérulent se trouve en suspension. Cette grande vitesse permet d'accélérer le mouvement de déplacement du produit pulvérulent vers la fente de sortie de la buse et favorise la répartition uniforme du débit de gaz injecté sur toute la longueur de la buse. Le gaz secondaire entraîne aussi du gaz ou l'air de l'atmosphère ambiante (gaz ou air induit) permettant ainsi la formation de turbulence qui favorise l'homogénéisation du mélange produit pulvérulent-gaz.

Il est également connu de la demande de brevet EP-A-0 374 023 un dispositif de distribution comportant, comme précédemment, deux parois délimitant une cavité en forme de lame, munie en partie supérieure d'un orifice dans lequel sont disposées une ligne d'injecteurs de solide pulvérulent en suspension dans un gaz et une arrivée de gaz, notamment d'air ambiant, adjacente auxdits injecteurs. En outre, la cavité est équipée de moyens d'injection de gaz sous pression comprenant une chambre alimentée en gaz sous pression et débouchant dans la cavité par une ouverture disposée de manière à injecter le gaz en direction du substrat, sensiblement parallèlement à la paroi de la cavité adjacente à ladite ouverture. L'ouverture est, de préférence, constituée par une pluralité d'ajutages d'axe sensiblement parallèle à la paroi de la cavité qui leur est adjacente.

Si ces deux types de dispositif donnent satisfaction, chacun d'entre eux ne peut cependant déposer qu'une unique couche, alors même qu'il est de plus en plus fréquent de munir les substrats de verre de tout un empilement de couches minces. Donc, si l'on souhaite déposer plusieurs couches successivement, par exemple sur un ruban de verre continu, par une technique de pyrolyse de solide pulvérulent, l'unique solution jusqu'à lors est de juxtaposer plusieurs dispositifs selon l'axe de défilement du ruban, juxtaposition assortie de nombreux inconvénients.

En effet, dans une installation de verre float, les dépôts par pyrolyse de poudre sont usuellement effectués sur le ruban de verre entre sa sortie de l'enceinte de bain float à proprement dit et son entrée dans l'étenderie, c'est-à-dire dans une zone bien souvent de dimensions très restreintes. Placer plusieurs dispositifs de distribution les uns à la suite des autres au-dessus du ruban de verre peut alors s'avérer difficile, voire impossible, de par leur encombrement.

Quand bien même l'espace serait suffisant, le fait de déposer successivement sur le ruban de verre des revêtements à des endroits différents de l'installation float peut obliger à effectuer, entre deux dépôts, une opération de réchauffage du verre, opération qui ne peut que compliquer la conception de l'installation.

L'invention a alors pour but de pallier les inconvénients précités en mettant au point des dispositifs de distribution de solides pulvérulents permettant de déposer sur un substrat une pluralité de couches minces tout en présentant un encombrement réduit.

Le dispositif selon l'invention destiné à la distribution de solides pulvérulents en suspension dans un gaz sur un substrat en défilement, notamment un ruban de verre, comprend deux parois délimitant une cavité en forme de lame disposée transversalement au sens de défilement du substrat et s'achevant à proximité de ce dernier en une fente de distribution. Cette cavité est en outre équipée d'au moins une cloison disposée de manière à la compartimenter longitudinalement, chacun des compartiments étant équipé de moyens propres d'injection de solide pulvérulent en suspension dans un gaz et de moyens propres d'injection de gaz sous pression.

Un unique dispositif selon l'invention permet ainsi avantageusement d'obtenir le dépôt de plusieurs couches minces, alors qu'auparavant il était nécessaire d'utiliser autant de dispositifs de pulvérisation que de couches à déposer. En effet, la présence de plusieurs compartiments, alimentés en poudre et en gaz de manière indépendante les uns des autres, permet la projection successive de solides pulvérulents de natures différentes sur le substrat.

En outre, le fait que tous les dépôts s'opèrent de manière quasi-consécutive supprime tout risque de refroidissement possible du substrat entre chacun d'entre eux.

De manière particulièrement surprenante, on peut ainsi obtenir en une même étape plusieurs couches superposées, couches qui se sont avérées parfaitement homogènes et distinctes les unes des autres. On aurait pu, au contraire, craindre légitimement que les différents jets de poudre issus de chacun des compartiments ne s'interpénètrent, au moins partiellement, au sortir de la fente de distribution à proximité du substrat, ce qui aurait conduit à créer, de manière incontrôlée, des couches inhomogènes aux interfaces très diffuses.

De préférence, chacune des cloisons présente dans la cavité est amovible et réglable en hauteur relative par rapport aux parois de la cavité. Pour garantir une parfaite séparation des jets de poudre, on peut ainsi disposer la cloison de manière à ce qu'elle dépasse de la fente de distribution en direction du substrat. Cependant, on a observé qu'empiriquement une canalisation satisfaisante des jets de poudre était obtenue en se contentant de faire affleurer cloison(s) et fente de distribution.

Il va de soi que si, au contraire, on veut provoquer une interpénétration partielle et contrôlée des jets de poudre, afin de créer des interfaces de couches diffuses, on peut positionner la ou les cloisons dans la cavité de manière à ce qu'elles soient plus distantes du substrat que ne l'est la fente de distribution, ce qui ménage dans la partie de la cavité la plus proche du substrat, une zone plus ou moins grande de contact entre lesdits jets.

La structure de la cloison peut être très variée. Ainsi, elle peut être pleine, ou au contraire creuse afin d'être éventuellement plus légère ou de permettre la circulation d'un fluide à l'intérieur. De préférence, elle est composée d'une ou plusieurs plaques métalliques, d'un métal résistant bien à haute température tel que l'acier inoxydable.

Chaque cloison définit deux parois. Le mode de réalisation le plus simple consiste à ce que ces deux parois soient parallèles entre elles. Cependant, elles peuvent aussi être au moins partiellement divergentes ou convergentes en direction du substrat. Il est également avantageux, éventuellement, de prévoir que les bords de ces parois, à proximité du substrat, soient légèrement arrondis afin de mieux contrôler la canalisation des jets de poudre.

Dans le cas d'une cloison unique, celle-ci est disposée de préférence de manière à séparer la cavité en deux compartiments symétriques, les deux parois de la cavité étant avantageusement planes et régulièrement convergentes vers le substrat.

Dans la mesure où le dispositif est destiné à déposer des couches sur un ruban de verre float qui peut faire plusieurs mètres de largeur, il est préférable d'équiper la cloison d'éléments rigidifiants. Ils sont avantageusement disposés à l'extérieur de la cavité, afin de ne pas entraîner de perturbations dans l'écoulement des jets de poudre vers le ruban et donc de marques à la surface de ce dernier. Ces éléments rigidifiants prennent par exemple la forme de tirants extérieurs.

Les moyens d'injection de solide pulvérulent en suspension dans un gaz alimentant chacun des compartiments comportent de préférence une pluralité de conduits d'alimentation disposés longitudinalement à la cavité et assurant ainsi une répartition bien homogène de la poudre sur toute la largeur du ruban de verre.

De même, les moyens d'injection de gaz sous pression, équipant chacun des compartiments afin d'assurer une bonne homogénéisation de la poudre en suspension, comprennent de préférence des chambres alimentées en gaz sous pression et débouchant dans lesdits compartiments par des ouvertures disposées pour injecter le gaz en direction du substrat, lesdites ouvertures pouvant prendre par exemple la forme de fentes éventuellement reliées aux chambres par des plaques poreuses, ou la forme d'ajutages, notamment percés dans des plaques.

Avantageusement, les ouvertures sont agencées de manière à ce que le gaz sous pression soit projeté dans le compartiment de manière sensiblement parallèle à la paroi adjacente auxdites ouvertures, cette disposition permettant d'optimiser à la fois l'homogénéisation et l'accélération de la poudre vers le substrat.

On peut également munir les compartiments d'au moins une arrivée de gaz supplémentaire, notamment d'air ambiant, ménagée par exemple à proximité des injecteurs de solides pulvérulents.

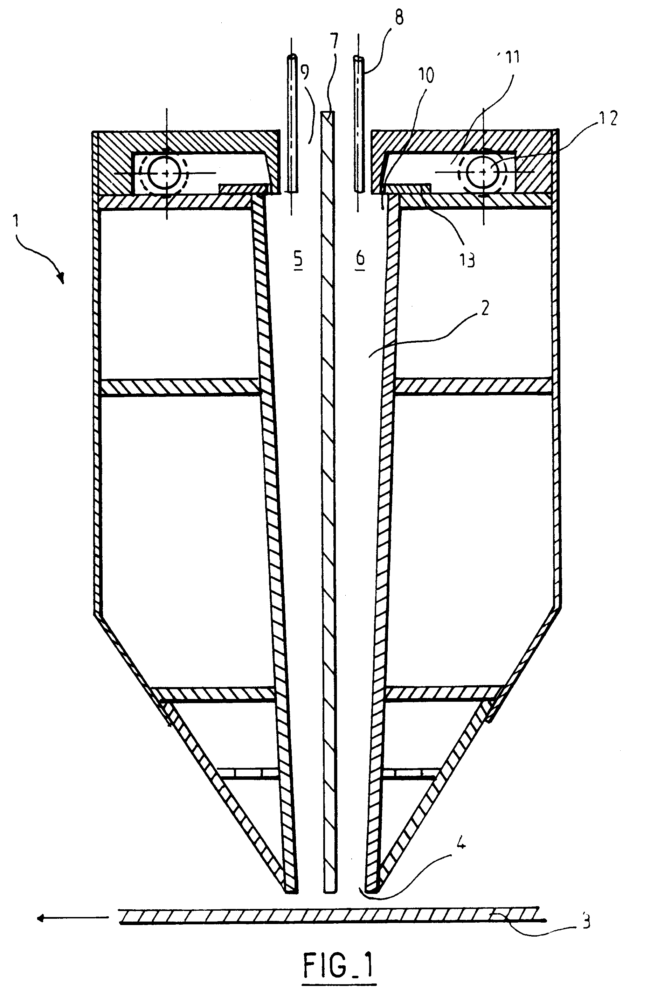

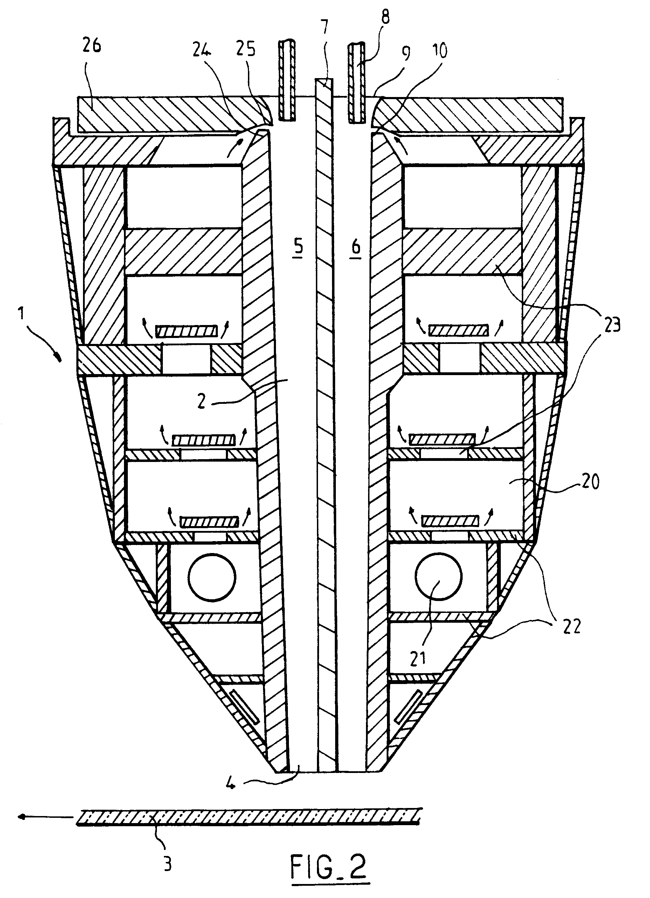

Les détails et caractéristiques avantageuses de l'invention sont ci-après décrits en référence aux figures 1 et 2 qui représentent chacune un dispositif conforme à l'invention, en coupe transversale.

Dans les deux cas, le dispositif s'étend en regard de toute la largeur, pouvant aller d'une cinquantaine de centimètres à plusieurs mètres, d'un substrat à revêtir, le substrat et le dispositif étant animés d'un mouvement de translation l'un par rapport à l'autre. Ici le substrat est un ruban de verre float défilant à une vitesse comprise, par exemple, entre 6 et 25 mètres par minute selon un plan sensiblement horizontal, le dispositif étant placé au-dessus du ruban transversalement à son axe de défilement et dans un plan sensiblement vertical.

Il va de soi que cette configuration relative pourrait être différente, et que, par exemple, le dispositif pourrait être incliné suivant un plan non perpendiculaire au plan du substrat. Il suffirait alors d'adapter en conséquence le vocabulaire employé ci-après tel que position "haute" ou "basse", "hauteur", plan "vertical" ou "horizontal".

Les deux dispositifs diffèrent essentiellement de par les moyens choisis pour injecter le gaz sous pression, leurs points communs sont tout d'abord décrits. Ils sont formés d'un corps de buse 1 traversé sur toute sa longueur et toute sa hauteur par une cavité 2 délimitée par deux parois régulièrement convergentes en direction du ruban de verre 3, et qui se termine en partie basse par une fente de distribution 4, se trouvant à une distance d'environ 15 à 120 mm du verre, de préférence d'environ 20 à 80 mm.

Le corps de buse renferme, plus spécialement dans la zone proche de la fente de distribution, des organes de refroidissement tels que des circuits d'eau pour éviter un échauffement trop important du "nez" de buse au fait de sa proximité avec le ruban de verre généralement à haute température.

Il comporte également des renforts ou entretoises assurant l'indéformabilité de la cavité : on peut aussi prévoir des tirants, non représentés, agissant sur ses parois et répartis sur sa hauteur afin d'en renforcer la rigidité et d'en régler précisément la largeur.

La cavité 2 est séparée en deux compartiments 5, 6 approximativement symétriques à l'aide d'une plaque 7 métallique pleine en acier inoxydable de 5 à 20 millimètres d'épaisseur, de préférence d'environ 10 mm d'épaisseur, qui cloisonne la cavité 2 sur pratiquement toute sa hauteur et affleure, en partie basse, la fente de distribution 4. Elle est rigidifiée à l'aide de tirants non représentés et disposés à l'extérieur de la cavité 2 afin de ne pas perturber l'écoulement de poudre vers le ruban de verre 3.

L'utilisation d'une telle cloison 7 permet d'alimenter un unique dispositif de distribution 1 en deux solides pulvérulents différents, entraînés par du gaz sous pression et dont les écoulements vers le substrat 3 se font de manière parallèle mais étanche. Le substrat se trouve ainsi revêtu de deux couches minces différentes (ou semblables) superposées l'une à l'autre.

Cette cloison 7 est réglable en hauteur.

Il suffit, en partie basse, qu'elle affleure la fente de distribution 4 pour assurer une bonne séparation des deux jets de poudre, mais elle peut aussi être en retrait dans la cavité 2 ou au contraire dépasser hors de la cavité de un à quelques millimètres en direction du substrat 3 sans provoquer d'interpénétration des jets de poudre, et donc sans que les couches obtenues présentent d'interfaces diffuses.

En effet, on a observé de manière étonnante que les deux jets de poudre, provenant en partie haute des compartiments 5, 6 par des conduits décrits ultérieurement, ont des comportements très différents au sortir de la fente de distribution 4 en direction du ruban de verre en défilement.

Si l'on utilise le terme de compartiments "amont" et "aval" en fonction du sens de défilement du ruban, on constate en effet que le jet de poudre issu de compartiment amont 6 a un écoulement essentiellement vers l'amont, tandis que le jet de poudre issu du compartiment aval 5 a un écoulement essentiellement vers l'aval, un rideau d'air s'établissant en prolongement de la cloison 7 vers le ruban 3, empêchant tout contact entre les deux jets, qui "s'évasent" ainsi en deux directions opposées le long du ruban de verre 3.

Si, au contraire, on souhaitait une certaine interpénétration pour obtenir une interface plus ou moins diffuse, il faut alors envisager de positionner la cloison 7 dans la cavité 2 de manière à ce que son extrémité la plus basse soit à une distance sensiblement plus grande du substrat 3 que ne l'est la fente de distribution 4.

Dans les modes de réalisation des figures 1 et 2, cette cloison 7 se trouve dans le plan médian de la cavité 2, séparant exactement en deux la fente de distribution 4 d'une largeur globale comprise entre par exemple 4 et 20 mm. Cependant, on peut aussi choisir de positionner la plaque 7 dans un plan non médian, définissant ainsi des compartiments de largeur différente, ce qui est intéressant quand, par exemple, une des deux couches à déposer sur le ruban doit être nettement plus épaisse que l'autre, et que le débit de l'un des deux solides pulvérulents est plus important.

De même, ici la cloison 7 est une plaque aux parois parallèles entre elles. Mais elle peut également avantageusement présenter des parois divergentes en direction du substrat 3, ce qui permet d'obtenir des compartiments dont les deux parois , l'une définie par la cloison 7, l'autre par la cavité 2, convergent l'une vers l'autre en direction du substrat 3, caractéristique très favorable à un bon entraînement de la poudre dans chacun des compartiments 5, 6.

Si la cloison 7 est ici pleine, elle peut également être creuse, pour des raisons de poids ou pour permettre par exemple la circulation d'un liquide de refroidissement à l'intérieur.

Chacun des compartiments 5, 6 est alimenté en solide pulvérulent en suspension dans un gaz à l'aide d'une pluralité de conduits d'alimentation 8 appelés injecteurs, disposés en partie haute dans un orifice 9 sur toute la longueur desdits compartiments, de façon à injecter une pluralité de jets de poudre en suspension dans le gaz, dans chaque compartiment délimité par les parois d'une part de la cavité 2, d'autre part de la plaque métallique 7 faisant office de cloison.

La position des injecteurs 8 est réglable verticalement, transversalement et latéralement dans l'orifice 9. Les injecteurs peuvent être orientés perpendiculairement à l'axe de la fente de distribution 4 ; ces injecteurs peuvent aussi être inclinés suivant une direction non perpendiculaire à l'axe de la fente. L'extrémité des injecteurs 8 correspondant à la sortie de la poudre peut se trouver à différents niveaux à l'intérieur de chacun des compartiments 5, 6 suivant les conditions d'injection souhaitées de la suspension de poudre, conditions dont dépendent les caractéristiques de la couche obtenue sur le substrat. De préférence, cette extrémité se situe au niveau d'une ouverture 10 servant à injecter, dans la cavité, le gaz sous pression, ouverture qui est décrite ci-après et qui diffère suivant les deux dispositifs.

Les injecteurs 8 ont une section inférieure à celle de l'orifice 9 afin de permettre une entrée de gaz, de préférence d'air ambiant, dans chaque compartiment 5, 6, à proximité des injecteurs. Le nombre d'injecteurs est variable. Il dépend de la longueur de la buse 1 et est déterminé pour que la trace formée par le solide pulvérulent sur le substrat 3, à la sortie de la fente de distribution 4, soit continue et uniforme. Chaque injecteur 8 peut par exemple être distant d'environ 5 cm de l'injecteur adjacent.

Dans le mode de réalisation de la figure 1, chacun des compartiments est en outre muni de moyens d'arrivée de gaz sous pression constitués par une chambre 11 alimentée en gaz sous pression et reliée, par exemple par une rampe à trous 12 à une source de gaz. Cette chambre 11 débouche dans chacun des compartiments 5, 6 par l'ouverture 10. Cette ouverture est, en particulier, placée à proximité des injecteurs 8, tangentiellement à une des parois qui délimitent le compartiment 5, 6.

Selon ce mode de réalisation, l'ouverture 10 est constituée par une pluralité d'ajutages percés dans une plaque 13, qui s'étend transversalement au substrat 3. Les ajutages ont des axes qui sont sensiblement parallèles à la paroi de la cavité 2 qui leur est adjacente. Ces ajutages sont distribués transversalement au substrat, de préférence d'une manière régulière. Les ajutages ont un diamètre compris entre 0,5 mm et 3 mm et de préférence entre 0,8 mm et 1,3 mm.

L'écart entre les ajutages est compris entre 1 mm et 15 mm et de préférence entre 5 mm et 10 mm. L'extrémité inférieure des ajutages est située, de préférence, au niveau de l'extrémité inférieure des injecteurs 8.

Le gaz sous pression est ainsi introduit dans le compartiment 5, 6 afin d'entraîner la poudre et l'arrivée d'air ambiant au niveau des orifices 9 dans lesquels sont disposés les injecteurs 8. La configuration choisie est telle que le gaz sous pression est injecté parallèlement à la paroi adjacente auxdits ajutages, c'est-à-dire ici à la paroi de la cavité 2.

On peut adopter une autre configuration, où le gaz sous pression est cette fois injecté sensiblement parallèlement à la paroi du compartiment définie par la cloison 7.

Dans le mode de réalisation de la figure 2, chacun des compartiments est muni de moyens d'arrivée de gaz sous pression comportant cette fois de fentes longitudinales de soufflage débouchant à proximité des injecteurs 8 et alimentées en gaz sous pression de la manière suivante :

Les deux moitiés de corps de buse situées de chaque côté de la cavité 2 sont creuses et forment chacune une série de chambres de gaz, et en général d'air, sous pression telles que 20, chaque série étant reliée par une rampe 21 à une source de gaz, d'air en général, et chaque chambre étant séparée de la chambre voisine de la même série par une cloison formant entretoise telle que 22 avec des passages tels que 23 soit en matériau poreux du type "Poral" soit par des fentes de détente, permettant ainsi de disposer à la sortie de la dernière chambre de la série, d'un débit constant sur toute la longueur de la buse.

Le gaz comprimé de chaque série de cavités 20 est injecté dans chaque compartiment 5, 6 à l'entrée, par une fente longitudinale de soufflage 10 calibrée, à lèvres 24 et 25 formées de façon à orienter le jet de gaz injecté tangentiellement à la paroi de la cavité 2 et plus précisément suivant un angle par rapport à cette paroi qui reste inférieur à 7° pour que ledit jet reste attaché à la paroi.

Tout comme précédemment, il est également possible d'injecter le gaz tangentiellement à la paroi du compartiment 5, 6 définie par la cloison 7.

Le calibrage de la fente 10 s'obtient par glissement de la plaque 26 dans une direction perpendiculaire aux parois de la cavité 2. Le gaz est injecté au travers des fentes de soufflage 10 à une vitesse bien supérieure à la vitesse de la poudre à la sortie des injecteurs. Avantageusement, cette vitesse est sonique, pour augmenter l'accélération du mélange et favoriser la répartition uniforme du débit de gaz injecté sur toute la longueur de la buse.

L'extrémité des injecteurs 8 affleure de préférence les fentes 10 de soufflage. Le gaz injecté par les fentes entraîne de l'atmosphère extérieure dans la cavité 2, entre les injecteurs 8, comme dans le mode de réalisation précédent.

On a utilisé chacun des deux dispositifs décrits ci-dessus pour déposer sur un ruban de verre float un double revêtement, notamment celui décrit dans la demande de brevet EP-A-0 500 445, revêtement comportant une première couche d'oxyde métallique dopé et sous-stoechiométrique protégée par une sur-couche à base d'oxyde tel que l'oxyde d'aluminium. Les dispositifs de l'invention permettent ainsi de "bloquer" en état de sous-stoechiométrie en oxygène la couche dopée de manière optimale, puisque les deux dépôts sont quasiment simultanés.

Les deux dispositifs sont alternativement disposés au-dessus d'un ruban de verre float de 4 mm d'épaisseur et d'une température d'environ 600°C ; défilant à une vitesse d'environ 12 m/mn entre sa sortie de l'enceinte du bain d'étain et son entrée dans l'étenderie. Les fentes de distribution sont à environ 40 mm de la surface du verre et chacune d'entre elles est séparée par la cloison en deux fentes, d'environ 5 mm de large chacune.

Une première série d'exemples consiste à former une première couche d'oxyde d'indium dopé à l'étain ITO surmontée d'une seconde couche d'oxyde d'aluminium Al₂O₃.

Chaque compartiment "amont" est alimenté au moyen de ses injecteurs en un mélange de 90 % en poids de formiate d'indium et 10 % en poids de dibutyloxyde d'étain d'un débit de 10 kg par heure et mètre linéaire de compartiment. Le gaz dans lequel le mélange en suspension est de l'air, d'un débit de 50 Nm³ par heure et par mètre linéaire de compartiment (Nm³ : m³ normalisé, c'est-à-dire ramené aux conditions normales de pression et température).

Chaque compartiment "aval" est alimenté au moyen de ses injecteurs en une poudre à base de tri-isopropylate d'aluminium d'un débit de 3 kg par heure et mètre linéaire de compartiment. Le gaz dans lequel il est en suspension est de l'air, d'un débit de 50 Nm³ par heure et mètre linéaire de compartiment.

En outre, chacun des compartiments est alimenté en gaz sous pression, par les fentes de soufflage ou les ajutages, le gaz étant de l'air à un débit de 200 Nm³ par heure et mètre linéaire de longueur de compartiments.

Le débit d'air induit est d'environ 100 Nm³ par heure et mètre linéaire de longueur de compartiment.

On obtient une première couche d'ITO de 280 nm surmontée d'une seconde couche d'Al₂O₃ d'environ 90 nm, avec des propriétés d'émissivité (0,10) et photométriques (transmission lumineuse de 87 %) très satisfaisantes, le revêtement étant dépourvu d'effet notable de voile ou d'irisations.

Une autre série de dépôts est effectuée, avec un premier dépôt d'une couche d'oxyde d'étain dopé au fluor SnO₂:F surmontée d'une couche d'oxyde d'aluminium Al₂O₃. La différence par rapport à la série précédente est que chacun des compartiments "aval" est ici alimenté en poudre de difluorure de dibutylétain de débit 5,6 kg par heure et par mètre linéaire de longueur de compartiment.

On obtient une première couche de SnO₂:F de 360 nm surmontée d'une seconde couche d'Al₂O₃ d'environ 80 nm, empilement également dépourvu d'effet notable de voile et d'irisation, présentant de bonnes propriétés d'émissivité (0,17) et photométriques (transmission lumineuse de l'ordre de 83 % et réflexion lumineuse de l'ordre de 8 %).

En conclusion, le dispositif avec le système de cloisonnement selon l'invention permet d'obtenir plusieurs couches minces de qualité très satisfaisante tout en permettant un gain de place considérable. En outre, il est très simple de mise en oeuvre, et on peut l'adapter aisément puisque les cloisons sont ajustables en position et en forme selon le type d'empilement de couches minces souhaitées, le nombre de couches à déposer et leurs épaisseurs relatives. Il est également modulable, puisque chacun des compartiments définis par ces cloisons fonctionnant indépendamment des autres. On peut donc n'en faire fonctionner qu'un certain nombre, voire qu'un seul, suivant les besoins. Ce dispositif peut alors se substituer avantageusement à tous les dispositifs précédents, et éviter ainsi les montages et démontages fastidieux de dispositifs. Il ne nécessite, enfin, aucune modification de l'installation float dans laquelle il peut avantageusement être disposé.

## Revendications

1. Dispositif de distribution (1) de solides pulvérulents en suspension dans un gaz sur un substrat (3) en défilement, notamment un ruban de verre, ce dispositif comprenant deux parois délimitant une cavité (2) en forme de lame disposée transversalement au sens de défilement du substrat et s'achevant à proximité du substrat en une fente de distribution (4), **caractérisé en ce que** ladite cavité (2) est équipée d'au moins une cloison (7) disposée de manière à la compartimenter longitudinalement, chacun des compartiments (5, 6) étant équipé de moyens d'injection de solide pulvérulent (8) et de moyens (10) d'injection de gaz sous pression.

2. Dispositif selon la revendication 1, **caractérisé en ce que** la position de la cloison (7) dans la cavité (2) est réglable, notamment en hauteur.

3. Dispositif selon l'une des revendications précédentes, **caractérisé en ce que** la cloison (7) est de structure pleine ou creuse, notamment constituée à l'aide de plaque(s) métallique(s).

4. Dispositif selon l'une des revendications précédentes, **caractérisé en ce que** la cloison (7) définit deux parois parallèles entre elles, ou au moins partiellement divergentes ou convergentes en direction du substrat.

5. Dispositif selon l'une des revendications précédentes, **caractérisé en ce que** les bords des parois définies par la cloison (7) à proximité du substrat (3) sont arrondis.

6. Dispositif selon l'une des revendications précédentes, **caractérisé en ce qu'**il comporte une cloison (7) séparant la cavité (2) en deux compartiments (5, 6) symétriques.

7. Dispositif selon l'une des revendications précédentes, **caractérisé en ce que** la cloison (7) affleure la fente de distribution (4).

8. Dispositif selon l'une des revendications précédentes, **caractérisé en ce que** la cloison (7) est munie d'éléments rigidifiants, notamment de tirants disposés hors de la cavité (2).

9. Dispositif selon l'une des revendications précédentes, **caractérisé en ce que** les moyens d'injection de solide pulvérulent alimentant chacun des compartiments (5, 6) comportent une pluralité de conduits d'alimentation (8) disposés longitudinalement à la cavité (2).

10. Dispositif selon l'une des revendications précédentes, **caractérisé en ce que** les moyens d'injection de gaz sous pression équipant chacun des compartiments comprennent des chambres (11, 20) alimentées en gaz sous pression et débouchant dans lesdits compartiments (5, 6) par des ouvertures (10) disposées pour injecter le gaz en direction du substrat (3), lesdites ouvertures (10) prenant la forme de fentes éventuellement reliées aux chambres (11, 20) par des plaques poreuses (23) ou d'ajutages, notamment percés dans des plaques (13).

11. Dispositif selon la revendication 10, **caractérisé en ce que** les ouvertures (10) par lesquelles sont injectés les gaz sous pression dans les compartiments (5, 6) sont agencées de manière à projeter lesdits gaz sensiblement parallèlement à la paroi adjacente auxdites ouvertures (10).

12. Dispositif selon l'une des revendications précédentes, **caractérisé en ce que au moins un des compartiments** (5, 6) est muni d'au moins une arrivée de gaz supplémentaire (9), notamment d'air ambiant, notamment à proximité des moyens d'injection (8) de solide pulvérulent.

## Claims

1. Apparatus (1) for the distribution of pulverulent solids suspended in a gas on a moving substrate (3), particularly a ribbon of glass, said apparatus having two walls defining a strip-like cavity (2) positioned transversely to the movement direction of the substrate and ending in the vicinity of the substrate in a distribution slot (4), characterized in that said cavity (2) is equipped with at least one partition (7) positioned so as to longitudinally compartmentalize it, each of the compartments (5, 6) being equipped with pulverulent solid injection means (8) and pressurized gas injection means (10).

2. Apparatus according to claim 1, characterized in that the position of the partition (7) in the cavity (2) can be regulated, particularly as regards height.

3. Apparatus according to either of the preceding claims, characterized in that the partition (7) has a solid or hollow construction and is in particular formed with the aid of metal plates.

4. Apparatus according to any one of the preceding claims, characterized in that the partition (7) defines two parallel walls, or walls which are at least partly divergent or convergent in the direction of the substrate.

5. Apparatus according to any one of the preceding claims, characterized in that the edges of the walls defined by the partition (7) in the vicinity of the substrate (3) are rounded.

6. Apparatus according to any one of the preceding claims, characterized in that it has a partition (7) subdividing the cavity (2) into two symmetrical compartments (5, 6).

7. Apparatus according to any one of the preceding claims, characterized in that the partition (7) is flush with the distribution slot (4).

8. Apparatus according to any one of the preceding claims, characterized in that the partition (7) is provided with rigidifying elements and in particular tie rods located outside the cavity (2).

9. Apparatus according to any one of the preceding claims, characterized in that the pulverulent solid injection means supplying each of the compartments (5, 6) have a plurality of supply pipes (8) positioned longitudinally to the cavity (2).

10. Apparatus according to any one of the preceding claims, characterized in that the pressurized gas injection means equipping each of the compartments comprise chambers (11, 12) supplied with pressurized gas and issuing into the said compartments (5, 6) by openings (10) arranged so as to inject the gas in the direction of the substrate (3), said openings (10) being in the form of slots optionally connected to the chambers (11, 20) by porous plates (23) or apertures, which are in particular made in the plates (13).

11. Apparatus according to claim 10, characterized in that the openings (10) by which the pressured gases are injected into the compartments (5, 6) are arranged so as to introduce said gases substantially parallel to the wall adjacent to said openings (10).

12. Apparatus according to any one of the preceding claims, characterized in that at least one of the compartments (5, 6) is provided with a supplementary gas and in particular ambient air intake (9), particularly in the vicinity of the pulverulent solid injection means (8).

## Patentansprüche

1. Vorrichtung (1) zur Verteilung in einem Gas suspendierter pulverförmiger Feststoffe auf einem vorbeilaufenden Substrat (3), das insbesondere aus Glas besteht, wobei die Vorrichtung zwei Wände umfaßt, die einen lamellenförmigen Hohlraum (2) begrenzen, der quer zur Durchlaufrichtung des Substrats angeordnet ist und in dessen Nähe in einen Verteilerschlitz (4) ausläuft, **dadurch gekennzeichnet, daß** der Hohlraum (2) mit mindestens einer Trennwand (7) versehen ist, die derart angeordnet ist, daß er durch sie längs in Anteile (5, 6) unterteilt wird, die jeweils mit Mitteln (8) zum Einblasen eines pulverförmigen Feststoffs und Mitteln (10) zum Einblasen von Druckgas ausgestattet sind.

2. Vorrichtung nach Anspruch 1, **dadurch gekennzeichnet, daß** die Lage der Trennwand (7) im Hohlraum (2) insbesondere in der Höhe verstellbar ist.

3. Vorrichtung nach Anspruch 1 oder 2, **dadurch gekennzeichnet, daß** die Trennwand (7) voll oder hohl und insbesondere aus (einer) Metallplatte(n) gebildet ist.

4. Vorrichtung nach einem der vorhergehenden Ansprüche, **dadurch gekennzeichnet, daß** die Trennwand (7) zwei Wände begrenzt, die zueinander parallel stehen oder in Substratrichtung wenigstens zum Teil divergieren oder konvergieren.

5. Vorrichtung nach einem der vorhergehenden Ansprüche, **dadurch gekennzeichnet, daß** die Ränder der Wände, die von der Trennwand (7) begrenzt werden, in der Nähe des Substrats (3) abgerundet sind.

6. Vorrichtung nach einem der vorhergehenden Ansprüche, **dadurch gekennzeichnet, daß** sie eine Trennwand (7) umfaßt, die den Hohlraum (2) in zwei symmetrische Abteile (5, 6) unterteilt.

7. Vorrichtung nach einem der vorhergehenden Ansprüche, **dadurch gekennzeichnet, daß** die Trennwand (7) mit dem Verteilerschlitz (4) bündig abschließt.

8. Vorrichtung nach einem der vorhergehenden Ansprüche, **dadurch gekennzeichnet, daß** die Trennwand (7) mit Versteifungselementen, insbesondere Zugbolzen, versehen ist, die außerhalb des Hohlraums (2) angeordnet sind.

9. Vorrichtung nach einem der vorhergehenden Ansprüche, **dadurch gekennzeichnet, daß** die Einblasmittel für den pulverförmigen Feststoff, welche jedes der Abteile (5, 6) versorgen, eine Vielzahl von längs zum Hohlraum (2) angeordneten Versorgungsleitungen (8) enthalten.

10. Vorrichtung nach einem der vorhergehenden Ansprüche, **dadurch gekennzeichnet, daß** die Einblasmittel für das Druckgas, mit welchen jedes der Anteile ausgestattet ist, Kammern (11, 20) enthalten, denen Druckgas zugeführt wird und welche in diese Anteile (5, 6) über Öffnungen (10) münden, die angeordnet sind, um das Gas in Richtung des Substrats (3) einzublasen, wobei die Öffnungen (10) die Form von Schlitzen, die gegebenenfalls durch Lochplatten (23) mit den Kammern (11, 20) verbunden sind, oder von Düsen annehmen, die insbesondere in Platten (13) gebohrt sind.

11. Vorrichtung nach Anspruch 10, **dadurch gekennzeichnet, daß** die Öffnungen (10), durch welche das Druckgas in die Abteile (5, 6) eingeblasen wird, derart gestellt werden, daß dieses Gas zu der Wand im wesentlichen parallel strömt, die an diese Öffnungen (10) angrenzt.

12. Vorrichtung nach einem der vorhergehenden Ansprüche, **dadurch gekennzeichnet, daß** wenigstens eines der Abteile (5, 6) insbesondere in der Nähe der Einblasmittel (8) für den pulverförmigen Feststoff mit mindestens einer Zuleitung (9) für zusätzliches Gas, insbesondere Umgebungsluft, versehen ist.
